(19) Europäisches Patentamt
European Patent Office
Office européen des brevets

(11) **EP 3 411 929 B1**

(12) **EUROPEAN PATENT SPECIFICATION**

(45) Date of publication and mention
of the grant of the patent:
**06.01.2021 Bulletin 2021/01**

(21) Application number: **17747852.6**

(22) Date of filing: **03.02.2017**

(51) Int Cl.:
*H01R 13/66* (2006.01)          *H02H 5/04* (2006.01)
*H01R 13/713* (2006.01)          *H02H 1/00* (2006.01)
*H02H 3/16* (2006.01)          *H02H 3/33* (2006.01)

(86) International application number:
**PCT/NO2017/050031**

(87) International publication number:
**WO 2017/135829 (10.08.2017 Gazette 2017/32)**

(54) **SAFETY SOCKET**

SICHERHEITSSTECKDOSE

PRISE DE COURANT DE SÉCURITÉ

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **05.02.2016 NO 20160194**

(43) Date of publication of application:
**12.12.2018 Bulletin 2018/50**

(73) Proprietor: **Home Contol
0250 Oslo (NO)**

(72) Inventor: **PER, Hopsø
1065 Oslo (NO)**

(74) Representative: **Thorvaldsen, Knut et al
c/o Apace IP AS
Parkveien 55
0256 Oslo (NO)**

(56) References cited:
**GB-A- 2 446 186          GB-A- 2 474 245
GB-A- 2 504 967          US-A1- 2006 028 316
US-A1- 2007 257 763          US-A1- 2008 191 833**

EP 3 411 929 B1

**Description**

BACKGROUND

*Field of the invention*

The present invention concerns a safety socket.

*Prior and related art*

A series fault occurs in a loaded electric circuit and is due to a deficient contact or connection. For example, poorly secured terminals, oxide coating or repeated mechanical strain etc. may cause such deficient connections. One or more of these factors make a socket connected to an electrical installation and/or the connection between the socket and a plug vulnerable to series faults, which in turn increases the risk for fire in the electrical installation.

Specifically, the power $P$ at the fault location is given by

$$P = RI^2 \qquad\qquad (1)$$

where $R$ is the fault resistance, and $I$ is the current through the fault.

Normally, the resistance $R$ at the fault location is small compared to the load resistance, e.g. the resistance in an appliance plugged into a socket. Thus, the current $I$ flowing through the fault and the load is largely unaffected by the fault. Accordingly, the dissipated power $P$ at the fault is proportional to the fault resistance $R$ for all practical purposes. The dissipated power heats the fault location, and may even cause an electric arc to form over the fault. The arc may last as long as the fault is supplied with current. The dissipated heat and/or electric arc increase the risk for fire in the electrical installation, e.g. in the insulation around wires or a wooden frame near the socket.

Series faults are difficult to detect, as the current through the fault is largely unaffected by the fault. In particular, the current disturbance caused by a series fault is typically much less than a ground fault current. Thus, a series fault is unlikely to trip ground fault protection set to break the power supply to a branch when the difference between input and output currents exceeds, for example, 10 mA or 100 mA.

US 6621677B1 discloses a system for serial protection illustrated in Fig. 1. The system has a phase 1 providing current through a load 10. The region to be monitored is represented by a protection point 2. A heat development sensor 3 is configured to melt well below the ignition temperature of nearby materials, and well above normal operation temperature. An example mentions the range 60-70 °C. If the dissipated power at the protection point 2 causes the sensor 3 to melt, the phase connects to ground 7 through a ground contact point 4 and a ground resistor 5.

The ground resistor 5 is selected such that the resulting ground fault current is sufficient to trip a ground fault protection 20 and thereby break the current supply to the phase 1. The resistor 5 is preferably of a type that burns off in a controlled manner in case of continuous overload, thereby removing the ground fault. This is to avoid excessive heat development in the ground resistor 5 in installations without ground fault protection 20.

If the element 3 melts, manual effort and time is required to remove a cover, replace the heat development sensor and remount the cover.

A ground fault protection 20 is typically mounted on a DIN-rail in a wall mounted box along with fuses to protect a branch circuit of the installation. The branch circuit typically comprises several sockets 100 for receiving a plug and an associated load 10. If the ground fault protection 20 trips, i.e. latches in an open state to prevent further current through the branch circuit, a manual search for the ground fault, or in the present context, the series fault is required. This involves more manual effort and more time.

If the ground fault protection 20 is not installed as substantial amount of the current will continue to pass through the load 10 and thus continue to heat the series fault connection. Further, the ground resistor 5 may cause several problems when acting as a safety resistor. These problems are generally due to variable resistance in the resistor 5 as it burns off. For example, the load 10 may be disconnected during the burn off. This would allow ground resistor 5 to cool off, and possibly lead to a permanently altered resistance. Thus, the burn off is difficult to control. Theoretically, a reduced ground current might alternatively reopen an unlatched ground fault protection 20 or otherwise feed the series fault with a new current from the installation.

US2007/257763 discloses an electrical receptacle comprising at least three thermal sensors for sensing temperature at respective locations in the electrical receptacle and for detecting temperature greater than a predetermined threshold. Further, it comprises a power cutoff mechanism for interrupting power to the electrical plug when at least one of the thermal sensors detects temperature greater than the predetermined threshold. After automatically turning off, the receptacle remains permanently non-conducting.

A safety socket should also accommodate other requirements. For example, child safety protection is desirable, and required by regulation in some countries.

The objective of this invention is to solve or reduce at least one of these and other problems while retaining the benefits of prior art.

SUMMARY OF THE INVENTION

This is achieved by a safety socket according to claim 1. Further features and benefits appear in the dependent claims.

In particular, the invention concerns a safety socket for protecting against a series fault. The safety socket comprises a thermal switch mounted in the socket and configured to interrupt the supply current when a detected temperature exceeds a threshold temperature. The safety socket is distinguished by an indicator for indicating the socket when the detected temperature exceeds the threshold temperature.

The series fault develops heat detected by the thermal switch mounted in the socket. The indicator indicates the socket with a series fault. This reduces the effort required to locate the fault.

In a first embodiment, the thermal switch is normally open and part of a ground fault line such that a ground fault protection interrupts the supply current when the normally open thermal switch closes.

The ground fault protection is normally mounted in a wall box and protects all socket on a branch circuit.

The ground fault line comprises a normally closed timer switch. The timer switch opens a certain time after the ground fault current started to flow. The purpose is to avoid overheating in the ground fault line.

Preferably the ground fault line comprises a ground resistor to limit the ground fault current.

The normally closed timer switch may comprise a safety resistor. In this case the safety resistor should have a resistance less than the resistance of the ground resistor. If the resistance of the safety sensor changes significantly during burn-off, the total resistance is still determined by the ground resistor for all practical purposes. The ground resistor can be provided with a large surface to dissipate heat and thus not alter its characteristics during burn-off of the safety sensor.

In an alternative embodiment, the thermal switch is normally closed, and forms part of a phase conductor within the socket. The normally closed thermal switch opens and interrupts the current to a load connected to the socket when temperature exceeds the threshold temperature.

Both embodiments may further comprise a residual current device within the socket, wherein the residual current device interrupts the supply current when a ground fault current exceeds its predetermined sensitivity. This cuts the supply current to the load connected to the socket, but does not affect other loads on the branch circuit.

In both embodiments the thermal switch may comprise a meltable element. This permits a simple mechanical design.

The socket preferably further comprises a child safety mechanism for inhibiting access to a phase through contact holes in the socket.

BRIEF DESCRIPTION OF THE DRAWINGS

The invention will be explained with reference to exemplary embodiments and the accompanying drawings, in which

Fig. 1 illustrates a principle drawing of the invention at prior art,
Fig. 2 illustrates a principle drawing of the invention with new component,
Fig. 3 illustrates a back view of a socket,
Fig. 4 illustrates a contact and indicator activated by a meltable element,
Fig. 5 is an alternative diagram and
Fig. 6 illustrates the embodiment in Fig. 5.

DETAILED DESCRIPTION OF A PREFERRED EMBODIMENT

The drawings are schematic and not necessarily to scale. For ease of understanding, numerous details known to the skilled person are omitted from the drawings and following description.

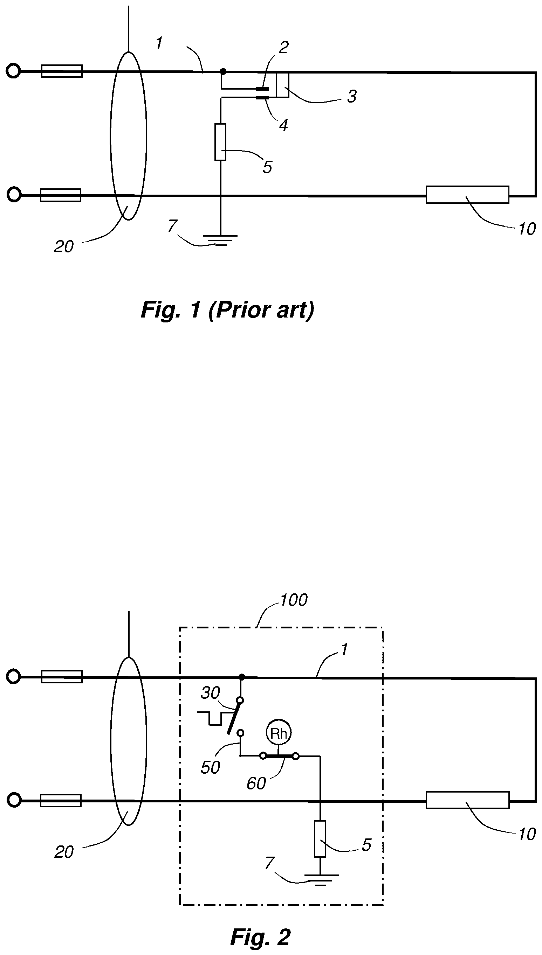

Fig. 2 shows a phase 1 supplying current to a load 10. There are typically several such phases 1 and loads 10 on a branch circuit. The dash dot box 100 illustrates one socket on the branch circuit. The ground resistor 5, ground 7 and ground fault protection 20 are as described above. A normally open thermal switch 30 replaces the heat developing sensor 3 in Fig 1. More particularly, the thermal switch 30 connects the live connector 1 to ground 7 if the temperature within the socket 100 rises to a level indicating a series fault. However, the thermal switch 30 may be based on any working principle, e.g. using a bimetal junction or another electrically detectable principle to detect temperature.

A ground fault connection 50 includes the normally open thermal switch 30, a normally closed timer switch 60 and the ground resistor 5, and connects the phase 1 to ground 7 if both switches are closed.

The timer switch 60 is connected in series with the ground resistor 5, and opens a set time after the thermal switch 30 closes. This interrupts a ground fault current through the ground fault connection 50. This allows the ground resistor 5 to be designed to dissipate the power caused by the ground fault current. For example, a ground resistance of 3 k$\Omega$ and a ground current of 30 mA would yield a power of 2.7 W according to equation 1, and the associated heat could conveniently be dissipated through a surface of resistor 5. The timer switch 60 may comprise an electronic circuit. Alternatively, the timer switch 60 may comprise a safety resistor 6 configured to burn off in a controlled manner by the ground fault current. In the latter case, the resistance of safety resistor 6 should be small compared to the resistance of the ground resistor 5, such that the ground resistor 5 determines the ground fault current through the ground fault connection 50 for all practical purposes.

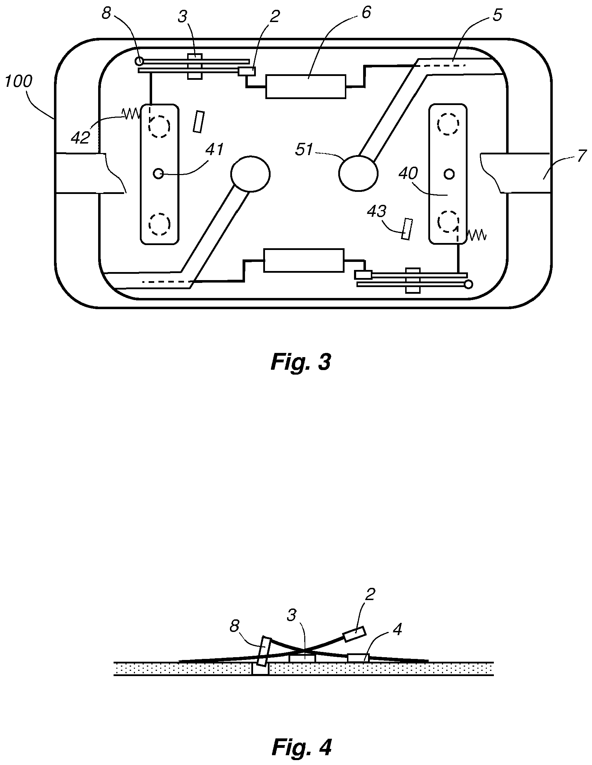

Fig. 3 shows a socket 100 viewed from behind. The components are mirrored about a diagonal line from the upper left corner to the lower right corner, such that each live connector 1 is connected in the same manner.

The contact 2, heat development sensor 3, ground resistor 5 and safety resistor 6 are connected as described above. The ground resistor 5 is connected to a ground 7 through a ground contact 51. An indicator 8 will become visible on the front of the socket 100 and indicate the location of the fault when the heat development sensor 3 has altered its state.

A child safety mechanism prevents inadvertent access to phases behind contact holes in the socket 100. The child safety mechanism comprises a bar 40 that covers the phases in a protecting position. The bar 40 has inclined faces that cause a rotation about a pin 41 when a plug is inserted into the contact holes. A stopper 43 limits the rotation, and a return spring 42 is arranged to rotate the mechanism back to the protecting position when the plug is withdrawn from the socket 100.

Fig. 4 is a side view illustrating the heat development sensor 3, an open contact 2, 4 and an indicator 8. The heat development sensor 3 will melt or alter its state when the temperature reaches a predetermined level, e.g. 60-70 °C. The contact 2 is mounted on a distal end of a spring biased arm, and will descend into contact with the ground contact point 4 when the heat development sensor 3 melts. This establishes contact to ground 7 through ground resistor 5. Similarly, the indicator 8 is mounted on a distal end of a spring biased arm, and will descend into a hole 9 when the heat development sensor 3 melts. The indicator 8 will become visible on the front of the socket 100 and indicate the location of the fault.

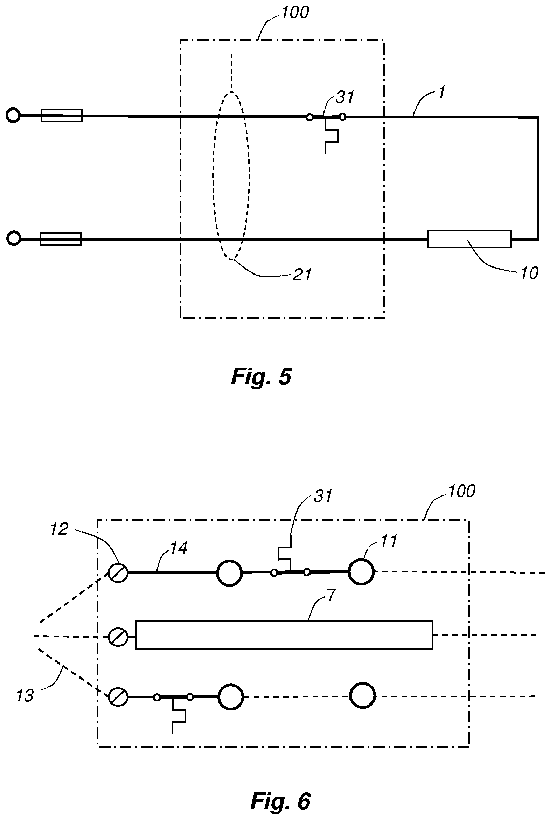

Fig. 5 is a schematic diagram over an alternative embodiment, where an optional residual current device (RCD) 21 and a normally closed thermal switch 31 are mounted within the socket 100. The RCD 21 works in the same way as the ground fault protection 20 described above, and may be implemented by a thyristor. Contrary to the normally open thermal switch 30 described above, the normally closed thermal switch 31 will open at the predefined temperature. By integrating the normally closed thermal switch 31 in the socket 100, the current through load 10 will be interrupted when the thermal switch 31 opens. Any other appliances on the branch circuit will not be affected. Once tripped, the normally closed thermal switch 31 may be latched in the open position. This prevents any further current through the series fault regardless of whether a ground fault protection 20 is installed or not. Similarly, the optional RCD 21 would isolate the load 10 without affecting other appliances on the branch circuit.

The location of the fault may be detected as the load 10 does not work when plugged into the socket 100 with a series fault. Thus, the load 10 indicates the socket 100 when the detected temperature exceeds the threshold temperature. Alternatively, the location of the fault may be indicated through an electronic signal triggering an indicator 80. The indicator 80 may be part of a central, a signal board or any other means known in the art.

Fig. 6 illustrates the alternative embodiment of the socket 100 shown in Fig. 5. The ground 7 is illustrated by a rail that can be connected to a ground wire by terminals 12. A phase conductor 14 is connected to a wire 13 through a terminal 12. A contact sleeve 11 is connected to the phase conductor 14. The normally closed thermal switch 31 forms part of the phase conductor 14, and interrupts the current through the phase conductor 14 when it opens. The wire 13 and the phase conductor 14 form parts of the phase 1 when joined at terminals 12. The socket 100 can thus provide current to the load 10 when the plug is inserted into the contact sleeves 11.

Thus, as the socket 100 is not in use it will be child proof; the circuit will be protected against a serial fault even if a ground fault protection 20 is not working or not installed, and the fault can be located via an indicator 8, 80.

While the invention has been described by examples, various alternatives and modifications will be apparent to one skilled in the art. The invention is defined by the accompanying claims.

**Claims**

1. A safety socket (100) for protecting against a series fault, comprising
   a thermal switch (30; 31) mounted in the socket (100) and configured to interrupt the supply current when a detected temperature exceeds a threshold temperature; said thermal switch (30) is configured to be normally open and part of a ground fault line (50) such that a ground fault protection (20) is configured to interrupt the supply current when the thermal switch (30) which is configured to be normally open closes said safety socket (100) comprises an indicator (8; 10; 80) configured for indicating the socket (100) when the detected temperature exceeds the threshold temperature **characterized by** the ground fault line (50) comprises a timer switch (60) configured to be normally closed and adapted to open a certain time after the ground current fault started to flow

2.  The safety socket (100) according to claim 1, wherein the ground fault line (50) comprises a ground resistor (5).

3.  The safety socket (100) according to claim 2, wherein the normally closed timer switch (60) comprises a safety resistor (6) with a resistance less than the resistance of the ground resistor (5).

4.  The safety socket (100) according to any preceding claim, further comprising a residual current device (21) in the socket (100), wherein the residual current device (21) interrupts the supply current when a ground fault current exceeds its predetermined sensitivity.

5.  The safety socket (100) according to any preceding claim, wherein the thermal switch (30; 31) comprises a meltable element (3).

6.  The safety socket (100) according to any preceding claim, wherein the socket (100) comprises a child safety mechanism (40) for inhibiting access to a phase (1) through contact holes in the socket (100).


**Patentansprüche**

1.  Sicherheitsbuchse (100) zum Schützen vor einer Leiterunterbrechung, die einen Thermoschalter (30; 31) umfasst, der in der Buchse (100) gelagert und konfiguriert ist, um den Netzstrom zu unterbrechen, wenn eine erfasste Temperatur eine Schwellentemperatur überschreitet;
    wobei der Thermoschalter (30) konfiguriert ist, um normalerweise offen zu sein und Teil einer Erdschlussleitung (50) zu sein, derart, dass ein Erdschlussschutz (20) konfiguriert ist, um den Netzstrom zu unterbrechen, wenn der Thermoschalter (30), der konfiguriert ist, um normalerweise offen zu sein, sich schließt,
    wobei die Sicherheitsbuchse (100) eine Anzeige (8; 10; 80) umfasst, die zum Anzeigen der Buchse (100) konfiguriert ist, wenn die erfasste Temperatur die Schwellentemperatur überschreitet, **gekennzeichnet dadurch, dass**
    die Erdschlussleitung (50) einen Zeitschalter (60) umfasst, der konfiguriert ist, um normalerweise geschlossen zu sein und angepasst ist, um sich zu einer gewissen Zeit zu öffnen, nachdem der Erdstromfehler zu fließen begonnen hat.

2.  Sicherheitsbuchse (100) nach Anspruch 1, wobei die Erdschlussleitung (50) einen Erdwiderstand (5) umfasst.

3.  Sicherheitsbuchse (100) nach Anspruch 2, wobei der normalerweise geschlossene Zeitschalter (60) einen Sicherheitswiderstand (6) mit einem Widerstandswert umfasst, der kleiner als der Widerstand des Erdwiderstands (5) ist.

4.  Sicherheitsbuchse (100) nach einem der vorhergehenden Ansprüche, die ferner eine Reststromvorrichtung (21) in der Buchse (100) umfasst, wobei die Reststromvorrichtung (21) den Netzstrom unterbricht, wenn ein Erdschlussstrom seine zuvor bestimmte Empfindlichkeit überschreitet.

5.  Sicherheitsbuchse (100) nach einem der vorhergehenden Ansprüche, wobei der Thermoschalter (30; 31) ein schmelzbares Element (3) umfasst.

6.  Sicherheitsbuchse (100) nach einem der vorhergehenden Ansprüche, wobei die Buchse (100) einen Kindersicherungsmechanismus (40) zum Sperren eines Zugangs zu einer Phase (1) durch Kontaktlöcher in der Buchse (100) umfasst.


**Revendications**

1.  Prise de sécurité (100) destinée à la protection contre un défaut en série, comprenant

un interrupteur thermique (30 ; 31) monté dans la prise (100) et conçu pour interrompre le courant d'alimentation lorsqu'une température détectée dépasse une température seuil ;

ledit commutateur thermique (30) est conçu pour être normalement ouvert et faire partie d'une ligne de défaut à la terre (50) de telle sorte qu'une protection de défaut à la terre (20) est conçue pour interrompre le courant d'alimentation lorsque le commutateur thermique (30) qui est conçu pour être normalement ouvert ferme, ladite prise de sécurité (100) comprend un indicateur (8 ; 10 ; 80) conçu pour indiquer la prise (100) lorsque la température détectée dépasse la température seuil **caractérisée en ce que** la ligne de défaut à la terre (50) comprend un commutateur de minuterie (60) conçu pour être normalement fermé et adapté pour s'ouvrir un certain temps après que le défaut de courant de terre a commencé à circuler.

2. Prise de sécurité (100) selon la revendication 1, dans laquelle la ligne de défaut à la terre (50) comprend une résistance de terre (5).

3. Prise de sécurité (100) selon la revendication 2, dans laquelle le commutateur de minuterie normalement fermé (60) comprend une résistance de sécurité (6) dotée d'une résistance inférieure à la résistance de la résistance de terre (5).

4. Prise de sécurité (100) selon l'une quelconque des revendications précédentes, comprenant en outre un dispositif de courant résiduel (21) dans la prise (100), dans laquelle le dispositif de courant résiduel (21) interrompt le courant d'alimentation lorsqu'un courant de défaut à la terre dépasse sa sensibilité prédéterminée.

5. Prise de sécurité (100) selon l'une quelconque des revendications précédentes, dans laquelle l'interrupteur thermique (30 ; 31) comprend un élément fusible (3).

6. Prise de sécurité (100) selon l'une quelconque des revendications précédentes, dans laquelle la prise (100) comprend un mécanisme de sécurité pour enfants (40) pour empêcher l'accès à une phase (1) à travers des trous de contact dans la prise (100).

**Fig. 1 (Prior art)**

**Fig. 2**

EP 3 411 929 B1

**Fig. 3**

**Fig. 4**

8

**Fig. 5**

**Fig. 6**

**EP 3 411 929 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 6621677 B1

- US 2007257763 A